# EUROPEAN PATENT SPECIFICATION

(11) **EP 1 921 381 B1**
(45) Date of publication and mention of the grant of the patent: **05.04.2017**
(21) Application number: 07119676.0
(22) Date of filing: 30.10.2007
(51) Int. Cl.: F23R 3/14, F23R 3/28, F23R 3/36, F23C 7/00, F23D 17/00, F23D 14/58, F23D 14/60

(54) **variable jet combustor**
Brennkammer mit veränderlichen Düsen
Chambre de combustion aux orifices variables

(30) Priority: 31.10.2006 KR 20060106423
(43) Date of publication of application: 14.05.2008
(73) Proprietor: Korea Electric Power Corporation, Seoul 135-791 (KR)
(72) Inventor: Lee, Min-Chul, 305-727, Daejeon Metropolitan City (KR); Chung, Jae-Hwa, 305-727, Daejeon Metropolitan City (KR); Seo, Seok-Bin, 305-727, Daejeon Metropolitan City (KR); Joo, Yong-Jin, 305-729, Daejeon Metropolitan City (KR); Kim, Jong-Jin, 302-791, Daejeon Metropolitan City (KR); Ahn, Dal-Hong, 302-782, Daejeon Metropolitan City (KR)
(74) Representative: Chaillot, Geneviève

(56) References cited:
- EP-A2- 0 266 953
- US-A- 2 458 497
- US-A- 2 993 338
- US-A- 4 754 600

## Description

### BACKGROUND OF THE INVENTION

### Field of the Invention

The present invention relates to a dual fuel nozzle of a gas turbine combustor with a variable jetting hole diameter, and more particularly to a dual fuel nozzle of a gas turbine combustor with a variable jetting hole diameter capable of enhancing fuel flexibility in a multiple fuel system for applying two or more fuels to a gas turbine at the same time.

### Description of the Related Art

Recently, development of various clean fuels has been conducted in many research institutions of the world to solve an emission problem of an energy source and an environmental problem. Many fuels such as biomass, a coal gas, GTL (Gas To Liquid Fuel) and CTL (Coal To Liquid Fuel) have been developed and commercialized recently. Also, the research and development have been conducted in a consumption field with the manufacture of the fuels.

A dry low NOx gas turbine employs a lean premixed combustion method, wherein a local high-temperature region in the diffusive flame is not generated, thereby suppressing the production of thermal NOx.

However, in the lean premixed combustion method, a mass ratio of a fuel amount to an air amount is 10 % or less. It means that the control of the fuel amount is very important. Further, it is very difficult to reach stable combustion conditions of the lean premixed flame. Accordingly, combustion instability, combustion vibration, a backfire of the flame and the like are generated according to a mixing state of fuel and air and load conditions. Thus, there are problems such as damage of gas turbine parts due to abnormal combustion and large pressure variation or heat loss of parts and life reduction due to high-temperature flow (hot gas), thereby causing an increase in the maintenance and repair costs of a gas turbine.

Further, conventionally, when the gas turbine is operated at a low load, a noxious gas such as yellow plume caused by NO₂ is discharged according to a combustion state. Thus, it may incur the enmity of the people around a power plant.

Recently, in the power plant using the gas turbine, a natural gas in which methane (CH₄) has a volume ratio of 85 % or more or distillate oil serving as a back-up fuel is used as a fuel. However, the fuel has a large range of fluctuation in market prices and a gas turbine capable of applying various power generation fuels thereto should be developed to correspond to the fluctuation range. Particularly, in the future, DME (dimethyl ether, CH₃OCH₃) which is a new fuel manufactured through a chemical processing method from various fuels such as a natural gas, coal, biomass and the like is expected to be applied after evaluating economical efficiency and technical efficiency. The DME has combustion characteristics such as a high burning velocity and a low ignition temperature. When the fuel is applied to the gas turbine power plant, the combustor may be burnt out due to the backfire of the flame. Also, a low heating value of the DME, 28.8 MJ/kg (59.3 MJ/Nm³), is lower than a low heating value of a natural gas, which is 49.0 MJ/kg (35.9 MJ/Nm³). Accordingly, it requires retrofitting of the combustor. Further, the combustor should be retrofitted to selectively use the natural gas and the DME fuel.

A dual fuel type gas turbine using heavy oil and natural gas, which is recently used for power generation, has independent channels which jet the fuel through different fuel jetting holes.

However, in the case of heavy oil power generation, the power generation cost is expensive and a noxious exhaust gas is largely generated. Accordingly, it is excluded from priority of power generation and the power generation is performed mainly using a natural gas as a fuel.
US 2 993 338 A discloses a combustor according to prior art.

This combustor comprises a duct having one side for introducing a gas and the other side for discharging the gas, a first jetting member which is installed at the other side of the duct and includes a plurality of first jetting holes for jetting a first fuel, and a switching member which is installed on the first jetting holes and includes first holes and second holes corresponding to the first jetting holes. By movement of the switching member either the first holes are connected to the first jetting holes while the second holes remain closed, or both the first and the second holes are connected to the first jetting holes. The combustor is disposed at a center of the duct to be parallel to a flowing direction of the gas. The first jetting member is arranged in a radial shape with respect to the center of the duct and includes a plurality of swirling members which swirl and discharge the gas introduced from a gas introduction hole.

### SUMMARY OF THE INVENTION

Therefore, the present invention has been made in view of the above problems, and it is an object of the present invention to provide a multi fuel nozzle of a gas turbine combustor with a variable jetting hole diameter capable of enhancing fuel flexibility in a multiple fuel system for applying two or more fuels to a gas turbine at the same time.

In accordance with an aspect of the present invention, there is provided a dual fuel nozzle of a gas turbine combustor with a variable jetting hole diameter, which includes a plurality of swirling wings disposed along an outer peripheral surface of a central shaft to have at least one main fuel jetting hole; an air duct positioned at the lower side of the swirling wings to supply air to the swirling wings; a pilot fuel injection hole and jetting hole formed to pass through a central portion of the central shaft to supply a pilot fuel; a switching plate disposed inside the swirling wings to vary the size of the main fuel jetting hole; a driving unit disposed to be connected to the switching plate to move a position of the switching plate; and a casing containing the swirling wings, the air duct, the switching plate and the driving unit.

Further, the main fuel jetting hole is formed in a direction of the central shaft to have a smaller diameter as it goes toward the central shaft. At least one switching hole is formed on the switching plate, and the switching hole has a smaller diameter as it goes toward the central shaft.

The switching holes include first switching holes and second switching holes. Preferably, the first switching holes and the second switching holes are arranged to have different diameters.

Further, the driving unit includes a rack gear, a spur gear which horizontally moves the rack gear, and a wire which connects the rack gear and the switching plate to vary the position of the switching plate. The main fuel jetting hole has a variable diameter according to a supplied fuel. Any one selected from a group consisting of a natural gas, DME (dimethyl ether, CH₃OCH₃), a coal gas and a synthetic gas may be supplied as the varied diameter.

Further, there is also provided a liner with at least one plurality of variable dual fuel nozzle.

As per the the invention, a combustor is provided, according to the definition of claim 1. Further advantageous modes of implementation of the invention are defined in the dependent claims.

### BRIEF DESCRIPTION OF THE DRAWINGS

The above and other objects, features and other advantages of the present invention will be more clearly understood from the following detailed description taken in conjunction with the accompanying drawings, in which:
FIG. 1 illustrates a cross-sectional view of a variable dual fuel nozzle according to the present invention;
FIG. 2 illustrates a plan view of the variable dual fuel nozzle shown in FIG. 1;
FIG. 3 illustrates a partial perspective view of swirling wings shown in FIG. 2;
FIG. 4 illustrates an exploded perspective view of the swirling wings shown in FIG. 3;
FIGS. 5A and 5B illustrate schematic diagrams showing an operation state of a switching plate; and
FIG. 6 illustrates a plan view of a variable dual fuel nozzle according to another embodiment of the present invention.

### DETAILED DESCRIPTION OF THE PREFERRED EMBODIMENTS

Hereinafter, an embodiment of the present invention will be described with reference to the accompanying drawings.

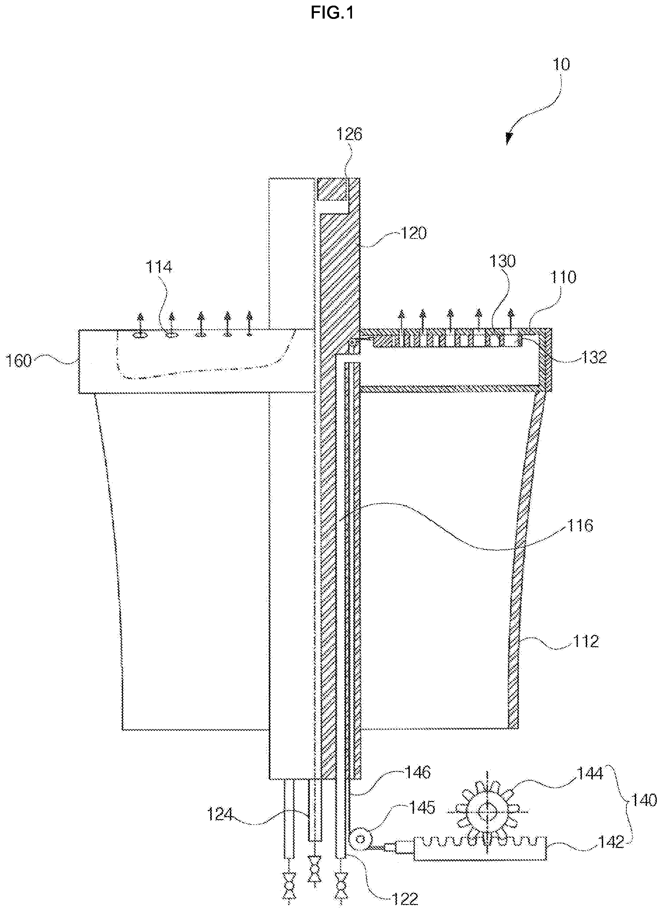

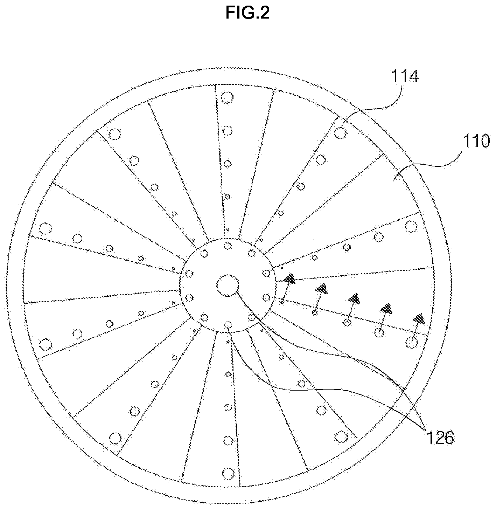

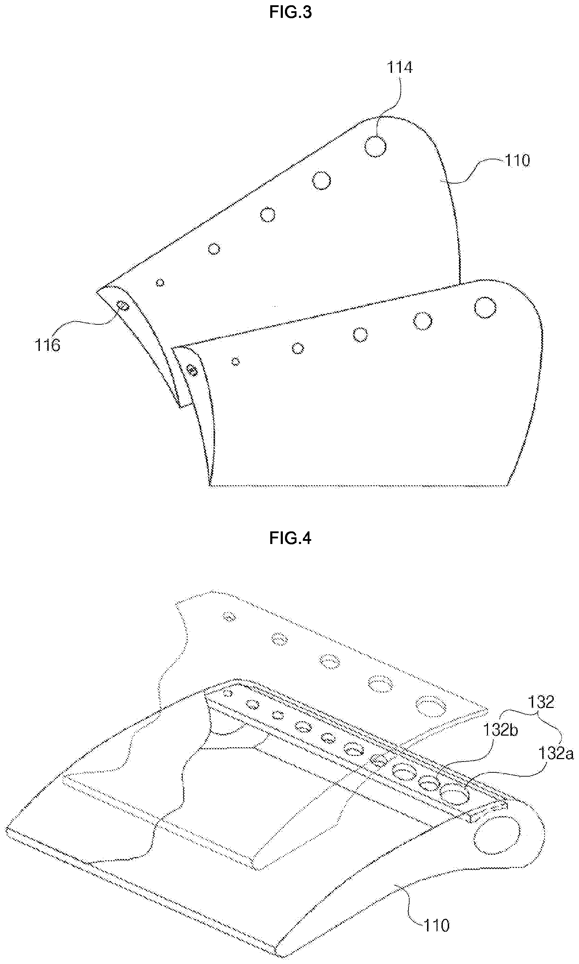

As shown in FIGS. 1 to 4, a variable dual fuel nozzle 10 includes swirling wings 110, a central shaft 120, a switching plate 130, a driving unit 140 and a casing 160.

That is, a plurality of swirling wings 110 is disposed along an outer peripheral surface of an upper portion of the central shaft 120. Then, a plurality of main fuel injection holes 122 and a pilot fuel injection hole 124 are disposed at a lower end of the central shaft 120 to pass through a central portion of the central shaft 120 from a lower portion to an upper portion. A plurality of pilot fuel jetting holes 126 is formed at an upper portion of the central shaft 120 to be connected to the pilot fuel injection hole 124. The main fuel injection holes 122 and the swirling wings 110 are connected to each other using a fuel channel 116. In this case, preferably, the main fuel injection holes 122 are formed to have the same number as the number of the swirling wings 110. Further, the pilot fuel jetting holes 126 are formed along an outer periphery of the central shaft 120 to uniformly jet the pilot fuel.

Further, a number of main fuel injection holes 114 are formed on the swirling wings 110. The main fuel injection holes 114 are formed to have a smaller diameter as it goes toward the central shaft 120. Accordingly, it is possible to perform a uniform mixing in relation to the pilot fuel jetted from the central shaft 120.

Further, the switching plate 130 is disposed at a lower portion of the swirling wings 110. The driving unit 140 is disposed to be connected to the switching plate 130, thereby allowing the driving unit 140 to vary a position of the switching plate 130. That is, when a spur gear 144 can be driven by a motor and a rack gear 142 connected to the spur gear 144 can horizontally move, a wire 146 connected at one side of the rack gear 142 moves the switching plate 130. In this case, the wire 146 is moved while being supported by a roller 145.

On the other hand, a number of switching holes 132 are formed on the switching plate 130. The switching holes 132 can have a variable diameter of the main fuel jetting holes 114 when the main fuel is jetted in relation to the main fuel jetting holes 114. Accordingly, the main fuel supplied through the main fuel injection holes 122 can be selected variously according to the use conditions of the main fuel. Any one selected from a group consisting of a natural gas, DME (dimethyl ether, CH₃OCH₃), a coal gas and a synthetic gas may be supplied as the main fuel.

Further, the switching holes 132 are formed to include first switching holes 132a and second switching holes 132b. The diameters of the first switching holes 132a and the second switching holes 132b are formed differently from each other. The first switching holes 132a and the second switching holes 132b can have different opening diameters of the main fuel jetting holes 114 according to the kinds of the selected main fuel.

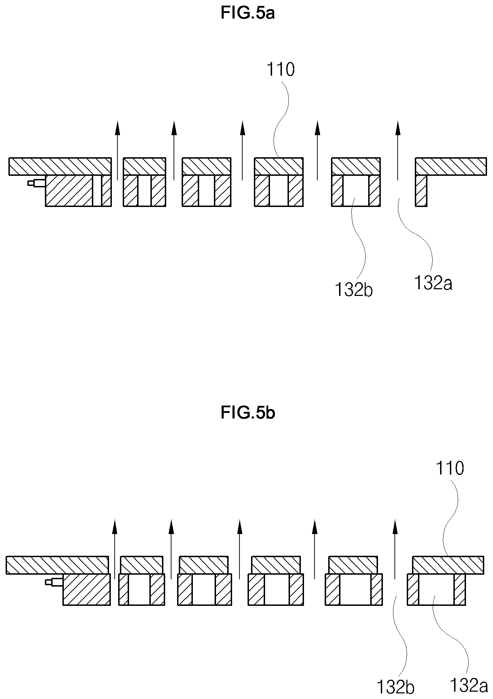

That is, as shown in FIGS. 5A or 5B, the opening diameters of the main fuel jetting holes 114 are varied by the first switching holes 132a and the second switching holes 132b according to a variable position of the switching plate 130.

Further, air is sucked through an air duct 112 by the rotation of the swirling wings 110. The fuel jetted from the pilot fuel jetting holes 126 and the main fuel jetting holes 114 is mixed with air supplied according to the rotation of the swirling wings 110 to be jetted into a combustion chamber.

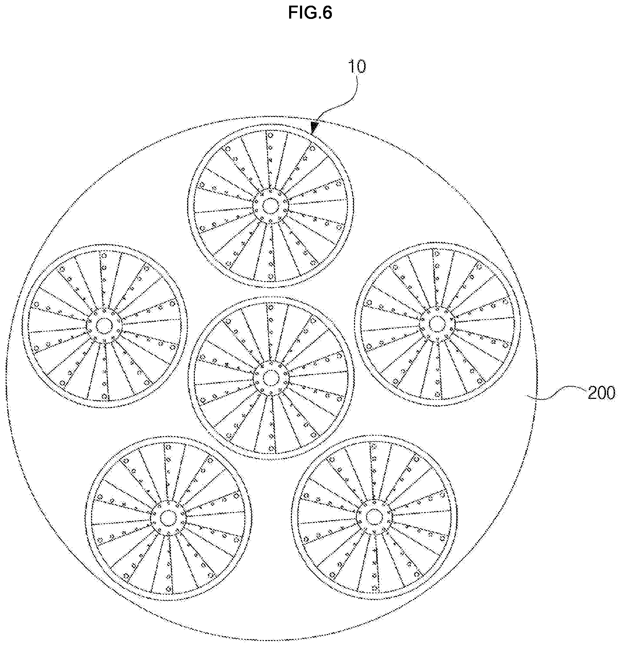

Referring to FIG. 6, according to another embodiment of the present invention, a plurality of variable dual fuel nozzles 10 is disposed and regularly arranged on a liner 200. That is, the variable dual fuel nozzles are configured by a casing and completed by coupling the casing to the liner.

According to the present invention, there is an effect of enhancing fuel flexibility in a multiple fuel system for applying two or more fuels to a gas turbine at the same time.

Further, when a fuel is switched in the gas turbine for dual fuel of a natural gas and DME, a fuel switching can be easily made only by performing a button manipulation. Accordingly, it is possible to contribute an increase of fuel flexibility and omit a decomposition operation of the gas turbine for replacement of the combustor. Thus, there is an effect of reducing labor costs and providing a large economic gain due to the reduction of stop time of the gas turbine.

Further, the fuel jetting hole designed corresponding to the combustion characteristics improves combustion efficiency and reduces combustion instability while reducing a noxious exhaust gas. Also, it is possible to prevent a backfire of the flame, thereby preventing heat burning out of high-temperature channel parts in the gas turbine.

Further, according to the present invention, the invention is applied to a multi-cup combustor with a number of combustion nozzles and a proper fuel jetting flow rate is set for each cup combustor. Accordingly, in a low nitrogen oxide gas turbine combustor for power generation using a lean premixed combustion method, there are effects of stabilizing a whole flame in the combustor, preventing damage of gas turbine parts by preventing a backfire and reducing combustion vibration, and extending a life.

Although the preferred embodiment of the present invention has been disclosed for illustrative purposes, those skilled in the art will appreciate that various modifications, additions and substitutions are possible, without departing from the scope of the invention as disclosed in the accompanying claims.

## Claims

1. A combustor, comprising:
a duct having one side for introducing a gas and the other side for discharging the gas;
a first jetting member which is installed at the other side of the duct and includes a plurality of first jetting holes (114) for jetting a first fuel; and
a switching member (130) which is installed on the first jetting holes (114) and includes first holes (132a) and second holes (132b) corresponding to the first jetting holes (114) ;
wherein either ones of the first holes (132a) and the second holes (132b) are connected to the first jetting holes (114) and the other ones are closed by movement of the switching member (130),
wherein the combustor is disposed at a center of the duct to be parallel to a flowing direction of the gas and further includes a second jetting member which jets a second fuel, and
the first jetting member is arranged in a radial shape with respect to the center of the duct and includes a plurality of swirling members (110) which swirl and discharge the gas introduced from a gas introduction hole,
wherein the combustor further comprises:
a wire (146) connected to one end of the switching member (130) to move the switching member (130) ;
a rack gear (142) connected to the other end of the wire (146) to apply tension to the wire (146) along with movement; and
a spur gear (144) coupled to the rack gear (142) to move the rack gear (142) by rotation.

2. The combustor according to claim 1, wherein the first holes (132a) and the second holes (132b) are alternately arranged.

3. The combustor according to claim 1, wherein the first holes (132a) and the second holes (132b) have gradually increasing sizes from one side to the other side, respectively, and a minimum size of the first holes (132a) is different from a minimum size of the second holes (132b).

4. The combustor according to claim 1, wherein the switching member (130) moves in a direction parallel to an arrangement direction of the first holes (132a) and the second holes (132b).

5. The combustor according to claim 1, wherein the first holes (132a) and the second holes (132b) are arranged on upper surfaces of the swirling members (110) from the center of the duct toward an edge of the duct, and the first holes (132a) and the second holes (132b) have gradually increasing sizes from the center of the duct toward the edge of the duct, respectively.

6. The combustor according to claim 1, wherein the second jetting member is connected to the first jetting member and includes a first supply line for supplying the first fuel to the first jetting member.

7. The combustor according to claim 1, wherein the second jetting member is formed at an upper end of the second jetting member and has second jetting holes (126) which jet the second fuel in a direction equal to a jetting direction of the first jetting member, and
the second jetting holes (126) include a central jetting hole arranged on a central shaft of the second jetting member and a plurality of outer jetting holes arranged around the central jetting hole.

8. The combustor according to claim 1, wherein the first fuel is any one of DME (dimethyl ether, CH₃OCH₃), a coal gas and a synthetic gas.

## Patentansprüche

1. Brennkammer mit:
einer Leitung mit einer Seite zur Einführung eines Gases und der anderen Seite, um das Gas zu entladen;
einem ersten Strahlelement, das an der anderen Seite der Leitung installiert ist und eine Vielzahl von ersten Düsen (114) zum Ausstoßen eines ersten Treibstoffs umfasst; und
einem Schaltelement (130), das auf den ersten Düsen (114) installiert ist und erste (132a) und zweite Löcher (132b) umfasst, die den ersten Düsen (114) entsprechen;
wobei entweder die ersten Löcher (132a) oder die zweiten Löcher (132b) mit den ersten Düsen (114) verbunden sind und die jeweils anderen durch die Bewegung des Schaltelements (130) geschlossen werden,
wobei die Brennkammer in einer Mitte der Leitung angebracht ist, um parallel zu einer Fließrichtung des Gases zu sein, und außerdem ein zweites Strahlelement umfasst, das einen zweiten Treibstoff ausstößt, und
das erste Strahlelement in einer radialen Form in Bezug auf die Mitte der Leitung angebracht ist und eine Vielzahl von Wirbelelementen (110) umfasst, die das Gas wirbeln und entladen, das durch ein Gaseintrittsloch eingeführt wird,
wobei die Brennkammer des Weiteren folgendes umfasst:
einen Draht (146), der mit einem Ende des Schaltelements (130) verbunden ist, um das Schaltelement (130) zu bewegen;
eine Zahnstange (142), die mit dem anderen Ende des Drahtes (146) verbunden ist, um Spannung auf den Draht (146) aufzubringen, zusammen mit Bewegung; und
ein Stirnrad (144), das mit der Zahnstange (142) verbunden ist, um die Zahnstange (142) durch Rotation zu bewegen.

2. Brennkammer nach Anspruch 1, wobei die ersten Löcher (132a) und die zweiten Löcher (132b) abwechselnd angeordnet sind.

3. Brennkammer nach Anspruch 1, wobei die ersten Löcher (132a) und die zweiten Löcher (132b) von einer Seite zur anderen Seite hin jeweils allmählich größer werden, und eine Mindestgröße der ersten Löcher (132a) sich von einer Mindestgröße der zweiten Löcher (132b) unterscheidet.

4. Brennkammer nach Anspruch 1, wobei das Schaltelement (130) sich in eine Richtung parallel zu einer Anordnungsrichtung der ersten Löcher (132a) und der zweiten Löcher (132b) bewegt.

5. Brennkammer nach Anspruch 1, wobei die ersten Löcher (132a) und die zweiten Löcher (132b) auf oberen Oberflächen der Wirbelelemente (110) von der Mitte der Leitung zu einer Kante der Leitung hin angeordnet sind, und die ersten Löcher (132a) und die zweiten Löcher (132b) von der Mitte der Leitung zu der Kante der Leitung hin jeweils allmählich größer werden.

6. Brennkammer nach Anspruch 1, wobei das zweite Strahlelement mit dem ersten Strahlelement verbunden ist und eine erste Zufuhrlinie umfasst, um den ersten Treibstoff an das erste Strahlelement zu liefern.

7. Brennkammer nach Anspruch 1, wobei das zweite Strahlelement an einem oberen Ende des zweiten Strahlelements gebildet ist und zweite Düsen (126) umfasst, die den zweiten Treibstoff in einer Richtung gleich einer Ausstoßrichtung des ersten Strahlelements ausstoßen, und
die zweiten Düsen (126) ein mittleres Ausstoßloch umfassen, das auf einer mittleren Welle des zweiten Strahlelements angeordnet ist, und eine Vielzahl von Außendüsen, die um das mittlere Ausstoßloch herum angeordnet sind.

8. Brennkammer nach Anspruch 1, wobei der erste Treibstoff DME (Dimethyläther, CH₃OCH₃), ein Leuchtgas oder ein synthetisches Gas ist.

## Revendications

1. Chambre de combustion comprenant :
un conduit ayant un côté pour introduire un gaz et l'autre côté pour décharger le gaz ;
un premier élément de jet qui est installé à l'autre côté du conduit et comprend une pluralité de premiers trous de jet (114) pour le jet d'un premier combustible ; et
un élément de commutation (130) qui est installé sur les premiers trous de jet (114) et comprend des premiers trous (132a) et des seconds trous (132b) correspondant aux premiers trous de jet (114) ;
les uns parmi les premiers trous (132a) et les seconds trous (132b) étant reliés aux premiers trous de jet (114) et les autres étant fermés par un mouvement de l'élément de commutation (130),
la chambre de combustion étant disposée à un centre du conduit pour être parallèle à une direction d'écoulement du gaz et comprenant en outre un second élément de jet pour le jet d'un second combustible, et
le premier élément de jet est disposé suivant une forme radiale par rapport au centre du conduit et comprend une pluralité d'éléments de tourbillonnement (110) qui font tourbillonner et déchargent le gaz introduit à partir d'un trou d'introduction de gaz,
la chambre de combustion comprenant en outre :
un fil (146) relié à une extrémité de l'élément de commutation (130) pour déplacer l'élément de commutation (130) ;
une crémaillère (142) reliée à l'autre extrémité du fil (146) pour appliquer une tension au fil (146) conjointement avec un mouvement ; et
un engrenage cylindrique (144) couplé à la crémaillère (142) pour déplacer la crémaillère (142) par rotation.

2. Chambre de combustion selon la revendication 1, dans laquelle les premiers trous (132a) et les seconds trous (132b) sont disposés de manière alternée.

3. Chambre de combustion selon la revendication 1, dans laquelle les premiers trous (132a) et les seconds trous (132b) ont des tailles augmentant progressivement d'un côté à l'autre côté, respectivement, et une taille minimale des premiers trous (132a) est différente d'une taille minimale des seconds trous (132b).

4. Chambre de combustion selon la revendication 1, dans laquelle l'élément de commutation (130) se déplace dans une direction parallèle à une direction de disposition des premiers trous (132a) et des seconds trous (132b).

5. Chambre de combustion selon la revendication 1, dans laquelle les premiers trous (132a) et les seconds trous (132b) sont disposés sur des surfaces supérieures des éléments de tourbillonnement (110) du centre du conduit vers un bord du conduit, et les premiers trous (132a) et les seconds trous (132b) ont des tailles augmentant progressivement du centre du conduit vers le bord du conduit, respectivement.

6. Chambre de combustion selon la revendication 1, dans laquelle le second élément de jet est relié au premier élément de jet et comprend une première ligne distribution pour distribution le premier combustible au premier élément de jet.

7. Chambre de combustion selon la revendication 1, dans laquelle le second élément de jet est formé à une extrémité supérieure du second élément de jet et comporte des seconds trous de jet (126) pour le jet du second combustible dans une direction égale à une direction de jet du premier élément de jet, et
les seconds trous de jet (126) comprennent un trou de jet central disposé sur une tige centrale du second élément de jet et une pluralité de trous de jet externes disposés autour du trou de jet central.

8. Chambre de combustion selon la revendication 1, dans laquelle le premier combustible est l'un quelconque parmi DME (oxyde de diméthyle, CH₃OCH₃), un gaz de houille et un gaz de synthèse.
